# EUROPEAN PATENT SPECIFICATION

(11) **EP 2 877 751 B1**
(45) Date of publication and mention of the grant of the patent: **21.09.2016**
(21) Application number: 13739850.9
(22) Date of filing: 03.07.2013
(51) Int. Cl.: F16B 5/02

(54) **TENSIONING SYSTEM WITH TENSIONING RING APPLICABLE THEREIN**
SPANNSYSTEM MIT EINEM DARIN ANBRINGBAREN SPANNRING
SYSTÈME DE MISE SOUS TENSION AYANT UNE BAGUE DE MISE SOUS TENSION POUVANT ÊTRE APPLIQUÉE EN SON SEIN

(30) Priority: 26.07.2012 NL 2009238
(43) Date of publication of application: 03.06.2015
(73) Proprietor: Gerssen, Hendrik Hedzer, 8321 ZA Urk (NL)
(72) Inventor: Gerssen, Hendrik Hedzer, 8321 ZA Urk (NL)
(74) Representative: Klavers, Cornelis
(86) International application number: PCT/NL2013/050490
(87) International publication number: WO 2014/017901

(56) References cited:
- DE-A1- 3 140 459
- US-A- 1 097 185
- US-A- 3 006 443

## Description

The present invention relates to a tensioning system according to the preamble of claim 1 and to a tensioning ring according to the preamble of claim 10 for use in the tensioning system.

Such a tensioning system and tensioning ring are known from US 3 006 443 A wherefrom these claims are delimited. In particular this document shows in one similar embodiment, profile members which are to be clamped on one another and which are each provided with overlapping holes and a pair of opposite adapter rings each ring comprises a cylindrical portion the outer circumference of which contacts in a hole the first profile. Each ring also comprises a protruding portion having an enlarged outer circumference, an eccentric axial bore extending through both adapter ring portions. In the bore a bolt can be inserted which passes through both holes in each of the profile members and through both holes in both opposite adapter rings. The pair or one of such eccentric adapters may be rotated, each in its respective hole, until the smaller holes, which pass through the adapters themselves, are brought in perfect alignment to receive an elongate fastening element viz. the bolt.

A drawback of said known tensioning rings resides in that the tensioning systems in which they are applied require substantial adaptations particularly in the mechanical construction in which the two tensioning rings are provided. In addition, the comparatively large number of components requires greater skill during mounting and successively adjusting and fixing the tensioning system used to interconnect the profiles.

²It is an object of the present invention to provide a simple tensioning system with associated tensioning ring, which system requires less adaptation in situ and is easier to handle.

To achieve this, the system according to the invention has the features of claim 1.

An advantage of the tensioning system according to the invention resides in that only one tensioning ring and only one bolt are required. In addition, it is advantageous that by means of said one bolt, which is accommodated in a rotationally secure manner in the bore of the tensioning ring having an enlarged outer circumference, the tensioning ring is rotated, causing any play between the profiles to be removed. This removal of play achieved by rotating the bolt can bring about desirable pulling forces as well as pressure forces. But said same bolt is also used to fix the profiles and the tensioning member on top of one another, without this requiring additional parts. In other words, the bolt which is accommodated in a rotationally secure manner in the bore, advantageously fulfils a plurality of functions, viz. tensioning or, where appropriate, pressing on or pulling the relevant profiles, and fixing said profiles. Advantageously, the profiles do not require additional features or holes, so that mounting, adjusting but also readjusting, if necessary, at a later point in time, and fixation can be carried out rapidly in situ. Instead of a bolt with a bolt head attached thereto, which is generally preferred in practice, use may alternatively be made of a stud on which a nut has to be screwed which is recessed in the bore.

Further, detailed, possible embodiments explained in the remaining claims are mentioned together with the associated advantages in the description given hereinbelow.

The tensioning system according to the present invention will now be explained in greater detail with reference to the figures mentioned below, in which the same elements are indicated by means of the same reference numerals. In the figures:
Fig. 1A is a front view of the assembled tensioning system according to the invention, and fig. 1B is a partial cross-sectional view of the tensioning system of Fig. 1A taken on the line A - A; and

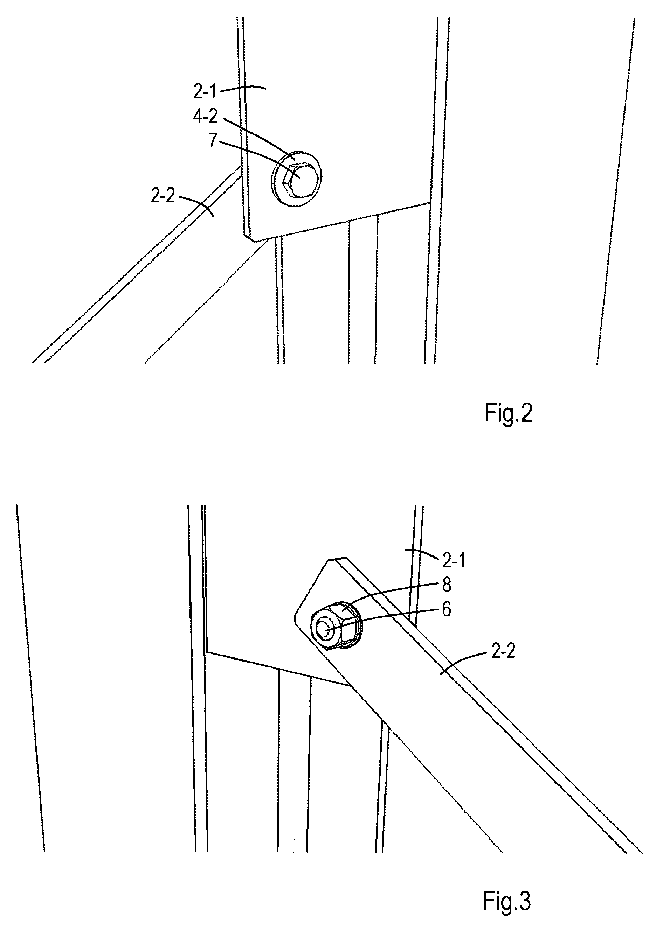

Figures 2 and 3 show perspective views of, respectively, a front side and a rear side of the tensioning system according to the invention.

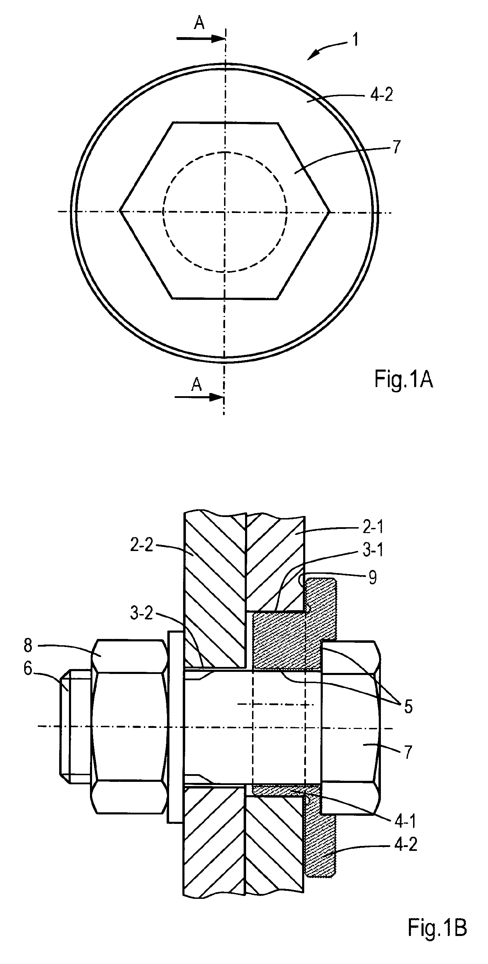

Figure 1A shows the front view of a tensioning system 1 which can suitably be used in a stability or wind bracing construction or in a stage, platform, frame or wall construction, which is often provided with beams, posts and/or diagonal elements. In figure 1B, a partial cross section taken on the line A - A is shown of the front view of fig. 1A. Said figure shows two interconnected profiles 2-1 and 2-2 of the front view of the tensioning system 1 as an example of the above-mentioned constructions. Said profiles 2-1 and 2-2, hereinafter also simply indicated by means of reference numeral 2, are each provided with a round through hole 3-1, 3-2 having a different diameter. Said through holes demonstrate an overlap when the two profiles 2-1 and 2-2 are placed on top of one another.

The tensioning system 1 further comprises a tensioning ring 4 made of steel, for example hard steel, which tensioning ring comprises a cylindrical portion 4-1 which fits in the hole 3-1 of the first profile 2-1. The tensioning member 4 has a through bore 5 which extends eccentrically in the axial direction through the portion 4-1 and through an adjacent projecting portion 4-2 having an enlarged diameter. In the assembled state of the system 1, said portion 4-2 bears against the front side of the profile 2-1.

A bolt 6 is passed through the stepped-diameter bore 5 and through the hole 3-2, in this case preferably from the front side. As a result, the bolt head 7 is at least partly recessed in the wider bore 5 of the protruding portion 4-2 in a rotationally secure manner. In principle it would be possible to invert the position of the bolt 6 or the bolt could be replaced by a stud the nut of which is then recessed in the wider bore 5 of the protruding portion 4-2. By rotating the recessed nut or bolt head 7, the tensioning member 4 in the hole 3-1 will rotate and the profiles 2 will move with respect to each other, causing pressure or pulling forces to be generated and any play can be readily pulled or pressed out of the construction formed of the profiles.

A nut 8 is screwed on the protruding, threaded part of, in this case, bolt 6, so that the tensioning system as a whole is also immovably fixed in the relevant position of rotation. Advantageously, this requires no additional measures.

The bolt head 7, which is often polygonal in section, may be of the recessed-head type for allowing a spanner to be inserted, in which case the head does not protrude. If said bolt head 7 is polygonal in section and a spanner can suitably be placed on the head, then the head 7 will protrude from the bore 5 of the second tensioning ring 4-2.

The hole 3-2 in the second profile 2-2 may be provided with internal screw thread that matches the screw thread on the bolt 6 or, if applicable, the stud, but, advantageously, this is not necessary.

To preclude slackening of the tensioning ring 4, one or more of the surfaces of the tensioning member 4 which are in frictional contact with each other and/or at least one of the two profiles 2-1, 2-2, may be provided with a surface structure such that additional friction occurs. By virtue thereof, the adjusting of the system components and the fixing thereof can be carried out more easily. Additionally, this counteracts undesirable relative rotation or slackening of the tensioning member 4. Said surface structure may be a roughened surface and/or may consist of grains, notches, ridges or grooves. Said structures 9, which are schematically shown at only one location in fig. 1B, may be parallel to one another or they may consist of, for example, rows which extend at a certain angle with respect to each other.

## Claims

1. A tensioning system (1) comprising:
- profiles (2-1, 2-2) which are to be clamped on one another and which are each provided with overlapping holes (3-1, 3-2), and
- a tensioning ring (4) which comprises a cylindrical portion (4-1) the outer circumference of which contacts, in the hole (3-1), the first profile (2-1), and which comprises a protruding portion (4-2) having an enlarged outer circumference, an eccentric axial bore (5) extending through both tensioning ring portions (4-1, 4-2), into which bore (5) a bolt (6) can be inserted which also passes through the hole (3-2) in the second profile (2-2),
**characterised in that**
the bore (5) is a stepped diameter bore having a wider bore (5) in the protruding portion (4-2), and
the head (7) or nut (8) of said bolt (6) being at least partly recessed in said wider bore (5) in a rotationally secure manner.

2. The tensioning system (1) according to claim 1, **characterized in that** the bolt head/nut (7, 8) protrudes axially from the bore (5) of the second portion (4-2).

3. The tensioning system (1) according to claim 1 or 2, **characterized in that** the bolt head/nut (7, 8) and the portion of the bore (5) in which the bolt head/nut (7, 8) is recessed are polygonal, such as triangular, quadrangular, pentagonal or hexagonal.

4. The tensioning system (1) according to any one of the claims 1 to 3, **characterized in that** the portion (4-2) of the tensioning ring (4) having an enlarged outer circumference is circular in shape.

5. The tensioning system (1) according to any one of the claims 1 to 4, **characterized in that** on the threaded portion of the bolt (6) which, after insertion into the bore (5), protrudes from the hole (3-2) of the second profile (2-2), a corresponding nut (8) can be tightened.

6. The tensioning system (1) according to any one of the claims 1 to 5, **characterized in that** the hole (3-2) in the second (2-2) profile has an internal screw thread which matches the screw thread on the bolt (6).

7. The tensioning system (1) according to any one of the claims 1 to 6, **characterized in that** one or more of the tensioning ring (4) surfaces (9) and/or at least one of the two profiles (2-1, 2-2) contacting one another have a surface structure such that mutual rotation or slackening of the tensioning ring (4) is counteracted.

8. The system (1) according to claim 7, **characterized in that** the surfaces (9) are roughened and/or comprise grains, notches, knurls, ridges or grooves.

9. A stability or wind bracing construction or a stage, platform, frame or wall construction provided with beams, posts and/or diagonal elements, comprising a tensioning system (1) according to any one of the claims 1 to 8.

10. A tensioning ring (4) suitable for use in the tensioning system (1) or the construction according to any one of the claims 1 to 8 or claim 9, which tensioning ring (4) comprises a cylindrical portion (4-1) and a portion (4-2) having an enlarged outer circumference, an eccentric axial bore (5) extending through both tensioning ring portions (4-1, 4-2) for accommodating a bolt, **characterised in that** the portion of the bore (5) adjacent to the second portion (4-2) of the tensioning ring (4) has an internal stepped diameter shaped bore having a wider recessed bore (5) in the protruding second portion (4-2), said bore (5) having an internal shape such that the head (7) or nut (8) of said bolt (6) may be accommodated therein in a rotationally secure manner.

11. The tensioning ring (4) according to claim 10, **characterized in that** the internal shape, which is complementary to said head (7), is polygonal, such as triangular, quadrangular, pentagonal or hexagonal.

12. The tensioning ring (4) according to claim 10 or 11, **characterized in that** the portion of the bore (5) in which the head/nut is recessed is located near the portion (4-2) of the tensioning ring (4) having an enlarged outer circumference.

13. The tensioning ring (4) according to any one of the claims 10 to 12, **characterized in that** the outer surface of the cylindrical portion (4-1) and/or the portion (4-2) having an enlarged circumference have a rough surface structure (9) and/or comprise grains, notches, knurls, ridges or grooves.

14. The tensioning ring (4) according to any one of the claims 10 to 13, **characterized in that** the tensioning ring is made of steel, in particular hard steel.

## Patentansprüche

1. Spannsystem (1), umfassend:
- Profile (2-1, 2-2), die aneinander zu spannen sind und die jeweils mit überlappenden Öffnungen (3-1, 3-2) ausgestattet sind, und
- einen Spannring (4), der einen Zylinderabschnitt (4-1) umfasst, dessen äußerer Umfang in der Öffnung (3-1) das erste Profil (2-1) kontaktiert, und der einen vorstehenden Abschnitt (4-2) mit einem vergrößerten äußeren Umfang, eine exzentrische axiale Bohrung (5), die sich durch beide Spannringabschnitte (4-1, 4-2) erstreckt, wobei in die Bohrung (5) ein Bolzen (6) eingesetzt werden kann, die auch durch die Öffnung (3-2) in dem zweiten Profil (2-2) hindurchgeht, umfasst,
**dadurch gekennzeichnet, dass**
die Bohrung (5) eine Bohrung mit abgestuftem Durchmesser ist, die eine breitere Bohrung (5) in dem vorstehenden Abschnitt (4-2) aufweist, und
der Kopf (7) oder die Mutter (8) vom Bolzen (6) mindestens in der breiteren Bohrung (5) in einer rotationsgesicherten Weise teilversenkt ist.

2. Spannsystem (1) nach Anspruch 1, **dadurch gekennzeichnet, dass** der Bolzenkopf/die Mutter (7, 8) von der Bohrung (5) des zweiten Abschnitts (4-2) axial vorsteht.

3. Spannsystem (1) nach Anspruch 1 oder 2, **dadurch gekennzeichnet, dass** der Bolzenkopf/die Mutter (7, 8) und der Abschnitt der Bohrung (5), in dem der Bolzenkopf/die Mutter (7, 8) versenkt ist, polygonal, wie dreieckig, viereckig, fünfeckig oder sechseckig, ist.

4. Spannsystem (1) nach einem der Ansprüche 1 bis 3, **dadurch gekennzeichnet, dass** der Abschnitt (4-2) des Spannrings (4), der einen vergrößerten äußeren Umfang aufweist, in der Form rund ist.

5. Spannsystem (1) nach einem der Ansprüche 1 bis 4, **dadurch gekennzeichnet, dass** auf dem Gewindeabschnitt vom Bolzen (6), der nach dem Einsetzen in die Bohrung (5) von der Öffnung (3-2) des zweiten Profils (2-2) vorsteht, eine entsprechende Mutter (8) angezogen werden kann.

6. Spannsystem (1) nach einem der Ansprüche 1 bis 5, **dadurch gekennzeichnet, dass** die Öffnung (3-2) in dem zweiten (2-2) Profil ein inneres Schraubengewinde aufweist, das mit dem Schraubengewinde auf dem Bolzen (6) übereinstimmt.

7. Spannsystem (1) nach einem der Ansprüche 1 bis 6, **dadurch gekennzeichnet, dass** eine oder mehrere von den Spannring- (4) -Flächen (9) und/oder mindestens eines von den zwei Profilen (2-1, 2-2), die einander kontaktieren, eine derartige Oberflächenstruktur aufweisen, dass einer wechselseitigen Rotation oder einem Lockern des Spannrings (4) entgegengewirkt wird.

8. System (1) nach Anspruch 7, **dadurch gekennzeichnet, dass** die Flächen (9) aufgeraut sind und/oder Körnungen, Kerben, Rändel, Furchen oder Nuten umfassen.

9. Stabilitäts- oder Windverbandaufbau oder ein Bühnen-, Plattform-, Rahmen- oder Wandaufbau, der mit Trägern, Säulen und/oder Diagonalelementen ausgestattet ist und ein Spannsystem (1) nach einem der Ansprüche 1 bis 8 umfasst.

10. Spannring (4), der zur Verwendung in dem Spannsystem (1) oder dem Aufbau nach einem der Ansprüche 1 bis 8 oder Anspruch 9 geeignet ist, wobei der Spannring (4) einen Zylinderabschnitt (4-1) und einen Abschnitt (4-2), der einen vergrößerten äußeren Umfang aufweist, eine exzentrische axiale Bohrung (5), die sich durch beide Spannringabschnitte (4-1, 4-2) erstreckt, um ein Bolzen aufzunehmen, umfasst, **dadurch gekennzeichnet, dass** der Abschnitt der Bohrung (5) neben dem zweiten Abschnitt (4-2) des Spannrings (4) eine innere Bohrung mit der Form eines abgestuften Durchmessers mit einer breiteren versenkten Bohrung (5) in dem vorstehenden zweiten Abschnitt (4-2) aufweist, wobei die Bohrung (5) eine innere Form derart aufweist, dass der Kopf (7) oder die Mutter (8) vom Bolzen (6) darin in einer rotationsgesicherten Weise aufgenommen werden kann.

11. Spannring (4) nach Anspruch 10, **dadurch gekennzeichnet, dass** die innere Form, die zu dem Kopf (7) komplementär ist, polygonal, wie dreieckig, viereckig, fünfeckig oder sechseckig, ist.

12. Spannring (4) nach Anspruch 10 oder 11, **dadurch gekennzeichnet, dass** sich der Abschnitt der Bohrung (5), in dem der Kopf/die Mutter versenkt ist, sich in der Nähe des Abschnitts (4-2) des Spannrings (4) befindet, der einen vergrößerten äußeren Umfang aufweist.

13. Spannring (4) nach einem der Ansprüche 10 bis 12, **dadurch gekennzeichnet, dass** die Außenfläche des Zylinderabschnitts (4-1) und/oder des Abschnitts (4-2), der einen vergrößerten Umfang aufweist, eine raue Oberflächenstruktur (9) aufweist und/oder Körnungen, Kerben, Rändel, Furchen oder Nuten umfasst.

14. Spannring (4) nach einem der Ansprüche 10 bis 13, **dadurch gekennzeichnet, dass** der Spannring aus Stahl und insbesondere aus Hartstahl hergestellt ist.

## Revendications

1. Système de mise sous tension (1) comprenant :
- des profilés (2-1, 2-2) fixés les uns aux autres et pourvus de trous superposés (3-1, 3-2), et
- une bague de mise sous tension (4) comprenant une partie cylindrique (4-1), dont la circonférence extérieure touche le premier profilé (2-1) à l'intérieur du trou (3-1), et comprenant une partie faisant saillie (4-2) présentant une circonférence extérieure agrandie, un alésage axial excentrique (5) s'étendant à travers les deux parties de bague de mise sous tension (4-1, 4-2), un boulon (6) pouvant être inséré dans ledit alésage (5), en passant également à travers le trou (3-2) dans le deuxième profilé (2-2),
**caractérisé en ce que**
l'alésage (5) est un alésage au diamètre étagé, présentant un alésage plus grand (5) dans la partie faisant saillie (4-2), et
la tête (7) ou l'écrou (8) dudit boulon (6) étant au moins partiellement encastrée dans ledit alésage plus grand (5), d'une manière fixe en rotation.

2. Système de mise sous tension (1) selon la revendication 1, **caractérisé en ce que** la tête/l'écrou de boulon (7, 8) fait saillie axialement à partir de l'alésage (5) de la deuxième partie (4-2).

3. Système de mise sous tension (1) selon la revendication 1 ou 2, **caractérisé en ce que** la tête/l'écrou de boulon (7, 8) et la partie de l'alésage (5) dans laquelle la tête/l'écrou de boulon (7, 8) est encastrée sont polygonales, par exemple triangulaires, quadrangulaires, pentagonales ou hexagonales.

4. Système de mise sous tension (1) selon l'une quelconque des revendications 1 à 3, **caractérisé en ce que** la partie (4-2) de la bague de mise sous tension (4) présentant une circonférence extérieure agrandie a une forme circulaire.

5. Système de mise sous tension (1) selon l'une quelconque des revendications 1 à 4, **caractérisé en ce qu'**un écrou (8) correspondant peut être serré sur la partie filetée du boulon (6), laquelle fait saillie à partir du trou (3-2) du deuxième profilé (2-2) après insertion dans l'alésage (5).

6. Système de mise sous tension (1) selon l'une quelconque des revendications 1 à 5, **caractérisé en ce que** le trou (3-2) dans le deuxième profilé (2-2) présente un filetage intérieur correspondant au filetage sur le boulon (6).

7. Système de mise sous tension (1) selon l'une quelconque des revendications 1 à 6, **caractérisé en ce que** l'un ou plusieurs des surfaces (9) de la bague de mise sous tension (4), et/ou au moins l'un des deux profilés (2-1, 2-2) en contact l'un avec l'autre présente une structure de surface permettant de contrecarrer une rotation mutuelle ou un relâchement de la bague de mise sous tension (4).

8. Système (1) selon la revendication 7, **caractérisé en ce que** les surfaces (9) sont rendues rugueuses et/ou comprennent des grains, des encoches, des moletages, des nervures ou des rainures.

9. Structure de contreventement ou de stabilisation, ou une structure d'étage, de plateforme, de cadre ou de paroi, pourvue de poutres et de poteaux et/ou d'éléments diagonaux, comprenant un système de mise sous tension (1) selon l'une quelconque des revendications 1 à 8.

10. Bague de mise sous tension (4) appropriée pour une utilisation dans le système de mise sous tension (1) ou la structure selon l'une quelconque des revendications 1 à 8 ou la revendication 9, ladite bague de mise sous tension (4) comprenant une partie cylindrique (4-1) et une partie (4-2) présentant une circonférence extérieure agrandie, un alésage axial excentrique (5) s'étendant à travers les deux parties de la bague de mise sous tension (4-1, 4-2) pour accueillir un boulon,
**caractérisée en ce que** la partie de l'alésage (5) adjacente à la deuxième partie (4-2) de la bague de mise sous tension (4) comporte un alésage au diamètre intérieur étagé, avec un alésage encastré plus large (5) dans la deuxième partie faisant saillie (4-2), ledit alésage (5) présentant une forme intérieure conçue de manière à ce que la tête (7) ou l'écrou (8) dudit boulon (6) puisse être accueilli(e) dans celui-ci d'une manière fixe en rotation.

11. Bague de mise sous tension (4) selon la revendication 10, **caractérisée en ce que** la forme intérieure complémentaire à ladite tête (7) est hexagonale, par exemple triangulaire, quadrangulaire, pentagonale ou hexagonale.

12. Bague de mise sous tension (4) selon la revendication 10 ou 11, **caractérisée en ce que** la partie de l'alésage (5) dans laquelle la tête/l'écrou est encastré(e) se trouve à proximité de la partie (4-2) de la bague de mise sous tension (4) présentant une circonférence extérieure agrandie.

13. Bague de mise sous tension (4) selon l'une quelconque des revendications 10 à 12, **caractérisée en ce que** la surface extérieure de la partie cylindrique (4-1) et/ou la partie (4-2) présentant une circonférence agrandie ont une structure de surface rugueuse (9) et/ou comprennent des grains, des encoches, des moletages, des nervures ou des rainures.

14. Bague de mise sous tension (4) selon l'une quelconque des revendications 10 à 13, **caractérisée en ce que** la bague de mise sous tension est constituée d'acier, en particulier d'acier dur.
